(19) Europäisches Patentamt
European Patent Office
Office européen des brevets

(11) **EP 4 576 080 A1**

(12) **EUROPEAN PATENT APPLICATION**
published in accordance with Art. 153(4) EPC

(43) Date of publication:
**25.06.2025 Bulletin 2025/26**

(21) Application number: **22957772.1**

(22) Date of filing: **09.09.2022**

(51) International Patent Classification (IPC):
**G10L 21/0308** (2013.01)     **G10L 21/0208** (2013.01)
**H04R 3/00** (2006.01)

(52) Cooperative Patent Classification (CPC):
**G10L 21/0208; G10L 21/0308; H04R 3/00**

(86) International application number:
**PCT/CN2022/117989**

(87) International publication number:
**WO 2024/050802 (14.03.2024 Gazette 2024/11)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Huawei Technologies Co., Ltd.**
**Shenzhen, Guangdong 518129 (CN)**

(72) Inventor: **ZHANG, Libin**
**Shenzhen, Guangdong 518129 (CN)**

(74) Representative: **Maiwald GmbH**
**Engineering**
**Elisenhof**
**Elisenstrasse 3**
**80335 München (DE)**

(54) **SPEECH SIGNAL PROCESSING METHOD, NEURAL NETWORK TRAINING METHOD AND DEVICE**

(57)     This application discloses a speech signal processing method, a neural network training method, and a device, which are applied to the signal processing field, includes: obtaining a first bone conduction speech signal, extracting an excitation parameter from the first bone conduction speech signal, and determining a first transfer function corresponding to the first bone conduction speech signal; then inputting the first transfer function into a trained neural network to obtain a second transfer function (that is, a predicted transfer function of an air conduction speech signal), where the trained neural network is obtained by training a neural network based on a target loss function by using a training dataset; and finally obtaining, based on the second transfer function and the excitation parameter, a first air conduction speech signal corresponding to the first bone conduction speech signal. **In** this application, based on the trained neural network, a transfer function of the bone conduction speech signal is mapped to the transfer function of the air conduction speech signal, to implement timbre compensation from the bone conduction speech signal to the air conduction speech signal, so that audio listening effect of the bone conduction speech signal is brighter and more comfortable, and call efficiency is improved.

FIG. 6

**Description**

TECHNICAL FIELD

This application relates to the signal processing field, and in particular, to a speech signal processing method, a neural network training method, and a device.

BACKGROUND

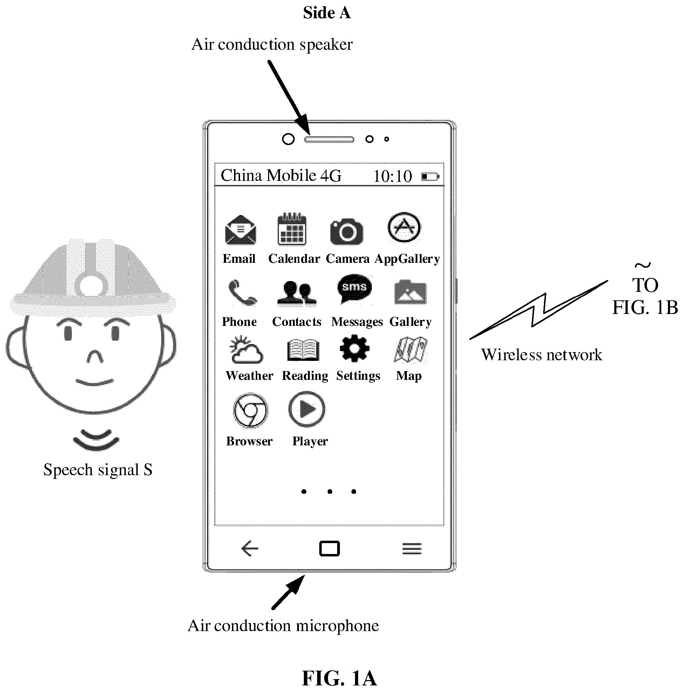

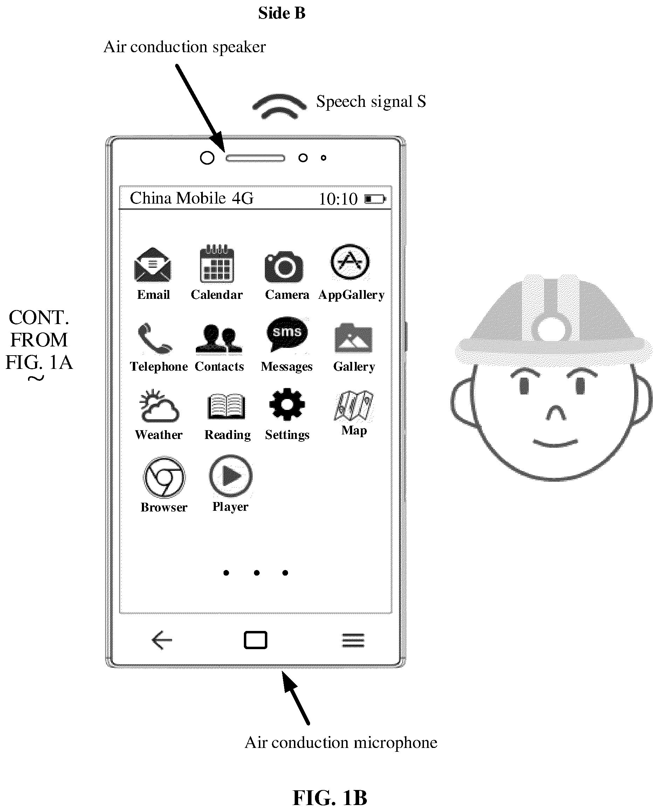

In a real-time call scenario, in most cases, an air conduction speech signal is used for speech signal transmission, and a transmission process may be shown in FIG. 1A and FIG. 1B. A user on a side A and a user on a side B perform a voice call via mobile phones. For example, the side A speaks and the side B listens. The foregoing transmission process is as follows: ① The user on the side A speaks to send a speech signal S. (2) A conduction microphone on a mobile phone on the side A collects the speech signal S. ③ The mobile phone on the side A encodes and compresses the speech signal S and then transmits an encoded and compressed speech signal to a mobile phone on the side B over a wireless network. ④ The mobile phone on the side B decodes the received signal to restore the speech signal S. (5) The mobile phone on the side B plays the speech signal S via an air conduction speaker of the mobile phone on the side B.

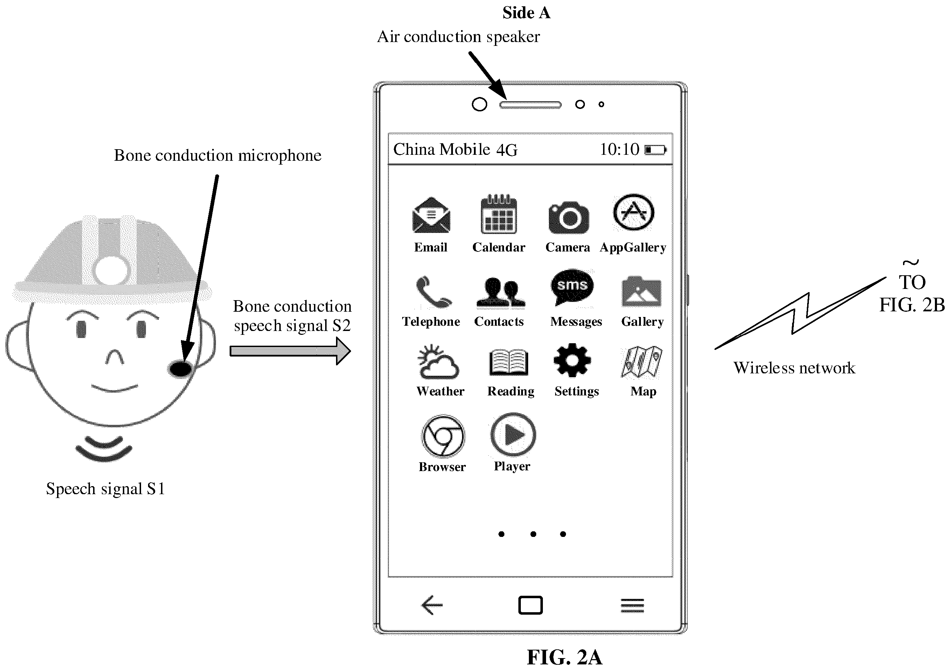

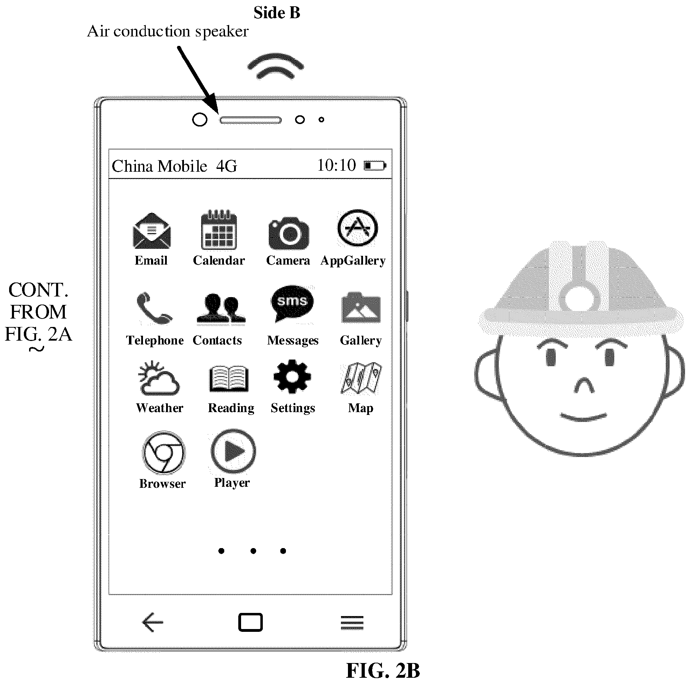

When the air conduction speech signal is transmitted, in addition to a voice of the user on the side A, ambient noise is also collected in the speech signal S. If the ambient noise is high, audio listening effect of the user on the side B is affected. Therefore, in some high-noise scenarios, such as in a mine or during rescue, a bone conduction speech signal is usually used for information transmission because a bone conduction microphone collects less ambient noise and a signal-to-noise ratio of audio is high. This can significantly ensure call efficiency in these scenarios. A transmission process is shown in FIG. 2A and FIG. 2B. A user on a side A and a user on a side B perform a voice call via mobile phones. For example, the side A speaks and the side B listens (it is assumed that the side B does not change). The transmission process is as follows: ① The user on the side A speaks to send a speech signal S1. (2) A bone conduction microphone on a head-mounted device (for example, a headset) on the side A is closely attached to a face of the user on the side A, and an audio signal S2 (which may also be referred to as a bone conduction speech signal S2) generated when the user on the side A speaks is collected based on skin vibration. The bone conduction speech signal S2 is sent (for example, sent through a Bluetooth connection between the head-mounted device and the mobile phone) to the mobile phone on the side A. ③ The mobile phone on the side A encodes and compresses the bone conduction speech signal S2 and transmits an encoded and compressed bone conduction speech signal to the mobile phone on the side B over a wireless network. ④ The mobile phone on the side B decodes the received signal to restore the bone conduction speech signal S2. ⑤ The mobile phone on the side B plays the bone conduction speech signal S2 via an air conduction speaker of the mobile phone on the side B.

Both a generation model of the air conduction speech signal and a generation model of the bone conduction speech signal are in a manner of convolution of an excitation source and an excitation channel (that is, excitation source*excitation channel=speech signal). However, a specific generation principle of the air conduction speech signal is different from a specific generation principle of the bone conduction speech signal. Both an excitation source of the air conduction speech signal and an excitation source of the bone conduction speech signal are vocal cords. However, an excitation channel of the air conduction speech signal is a pharyngeal cavity, an oral cavity, and the like; and an excitation channel of the bone conduction speech signal is muscle, bone, and the like. Because the excitation channel of the air conduction speech signal is different from the excitation channel of the bone conduction speech signal, final sounds may be greatly different. Because the excitation channel of the air conduction speech signal is an air transmission channel, distortion is small and brightness is high. The excitation channel of the bone conduction speech signal is a solid and soft transmission channel. Therefore, distortion is great, brightness is lower than that of the air conduction speech signal, and sound comfort is poor. More seriously, a voice on the side A heard by a peer end (for example, the side B) is not natural, and even a speaker may be unclear. This affects call efficiency.

SUMMARY

Embodiments of this application provide a speech signal processing method, a neural network training method, and a device, to map a transfer function (that is, a first transfer function) of a bone conduction speech signal to a transfer function (that is, a second transfer function) of an air conduction speech signal based on a trained neural network, so as to implement timbre compensation from the bone conduction speech signal to the air conduction speech signal, so that audio listening effect of the bone conduction speech signal is brighter and more comfortable, and call efficiency in high-noise scenarios such as a mine or rescue scenario can be ensured.

In view of this, embodiments of this application provide the following technical solutions.

According to a first aspect, an embodiment of this application first provides a speech signal processing method, which may be applied to the signal processing field. The method includes: first obtaining a to-be-processed bone conduction speech signal, where the bone conduction speech signal may be referred to as a first bone conduction speech signal. Then, an excitation parameter is extracted from the first bone conduction speech signal. Then, a transfer function (also referred to as a first transfer function) of the first bone conduction speech signal is determined based on the first bone conduction speech signal. After the first transfer function of the first bone conduction speech signal is obtained, the first transfer function is input to a trained neural network, to output a second transfer function. The second transfer function is a predicted transfer function of an air conduction speech signal, and therefore may also be referred to as a predicted transfer function. Finally, a first air conduction speech signal corresponding to the first bone conduction speech signal is obtained based on the second transfer function output by the neural network and the excitation parameter that is determined in advance.

In the foregoing implementation of this application, based on the trained neural network, the transfer function (that is, the first transfer function) of the bone conduction speech signal is mapped to the transfer function (that is, the second transfer function) of the air conduction speech signal, to implement timbre compensation from the bone conduction speech signal to the air conduction speech signal, so that audio listening effect of the bone conduction speech signal is brighter and more comfortable, and is closer to auditory perception of the air conduction speech signal.

In a possible implementation of the first aspect, the trained neural network is obtained by training a neural network based on a target loss function by using a training dataset. The training dataset includes a plurality of pieces of training data, the training data includes a first true transfer function of the bone conduction speech signal, and the first true transfer function is obtained based on an audio signal that is emitted from a sound source and that is collected by a bone conduction microphone. An output of the neural network is the predicted transfer function, the predicted transfer function corresponds to a second true transfer function of the air conduction speech signal, and the second true transfer function is obtained based on an audio signal that is emitted from the sound source and that is collected by the air conduction microphone.

In the foregoing implementation of this application, how the trained neural network is obtained through training is specifically described. In a network manner, mapping quality may be improved by increasing a scale of a mapping network, and this is flexible.

In a possible implementation of the first aspect, the target loss function may be an error value between the predicted transfer function and the second true transfer function.

In the foregoing implementation of this application, an implementation of the target loss function is specifically described, which is simple and easy to operate.

In a possible implementation of the first aspect, a manner of determining the first transfer function of the first bone conduction speech signal based on the first bone conduction speech signal may be: performing a deconvolution operation on the first bone conduction speech signal based on the excitation parameter, to obtain the first transfer function of the first bone conduction speech signal.

In the foregoing implementation of this application, an implementation of obtaining the first transfer function is specifically described, and the implementation is feasible.

In a possible implementation of the first aspect, a manner of obtaining, based on the second transfer function and the excitation parameter, the first air conduction speech signal corresponding to the first bone conduction speech signal may be: performing a convolution operation on the second transfer function and the excitation parameter, to obtain the first air conduction speech signal corresponding to the first bone conduction speech signal.

In the foregoing implementation of this application, an implementation of obtaining the first air conduction speech signal is specifically described, and the implementation is feasible.

In a possible implementation of the first aspect, a manner of obtaining the first bone conduction speech signal may be: first collecting an audio signal via the bone conduction microphone, and then performing noise reduction on the collected audio signal. For example, noise reduction may be performed by using a spectral subtraction noise reduction algorithm, to obtain the first bone conduction speech signal.

In the foregoing implementation of this application, noise reduction processing is performed on the first bone conduction speech signal. Therefore, a signal spectrum of the speech signal is more pure.

In a possible implementation of the first aspect, the excitation parameter includes a fundamental frequency of the first bone conduction speech signal and a harmonic of the fundamental frequency.

In the foregoing implementation of this application, components included in the extracted excitation parameter are specifically described, and this is feasible.

A second aspect of embodiments of this application provides a neural network training method. The method includes: first collecting, via a bone conduction microphone and an air conduction microphone within specific duration, audio signals emitted from a sound source (for example, a user A), for example, collecting n (n≥2) bone conduction speech signals and n air conduction speech signals that are emitted from the user A when the user A speaks. Then, a true transfer function (which may be referred to as a first true transfer function) corresponding to each bone conduction speech signal may be further obtained based on each bone conduction speech signal, and a total of n first true transfer functions may be obtained by the n bone conduction speech signals. Similarly, a true transfer function (which may be referred to as a second true transfer function) corresponding to each air conduction speech signal may be further obtained based on each air conduction speech signal, and a total of n second true transfer functions may be obtained based on the n air conduction speech signals. The n first true transfer functions are used as a training dataset of a neural network, and the neural network is trained based on a target loss function until a training termination condition is met, to obtain a trained neural network, where the target loss function is obtained based on the second true transfer function.

In the foregoing implementation of this application, how the trained neural network is obtained through training is specifically described. In a network manner, mapping quality may be improved by increasing a scale of a mapping network, and this is flexible.

In a possible implementation of the second aspect, the bone conduction microphone and the air conduction microphone are deployed in a same device, and a training process of the neural network is performed on the device.

In the foregoing implementation of this application, training processes of the bone conduction microphone, the air conduction microphone, and the neural network are all on a same device, so that an online training function can be implemented, and this is flexible.

In a possible implementation of the second aspect, the same device includes a head-mounted device, for example, a headset.

In the foregoing implementation of this application, a form of the same device is specifically described, and this is feasible.

In a possible implementation of the second aspect, the target loss function may be an error value between a predicted transfer function and the second true transfer function.

In the foregoing implementation of this application, an implementation of the target loss function is specifically described, which is simple and easy to operate.

In a possible implementation of the second aspect, that the training termination condition is met includes but is not limited to: a value of the target loss function reaches a preset threshold; or the target loss function begins to converge; or a quantity of training times reaches a preset quantity of times; or training duration reaches preset duration; or a training termination instruction is obtained.

In the foregoing implementations of this application, several implementations of meeting the training termination condition are specifically described. The implementations may be selected and used based on an actual application scenario, and are widely applicable.

A third aspect of embodiments of this application provides an execution device. The execution device has a function of implementing the method in the first aspect or any one of the possible implementations of the first aspect. The function may be implemented by hardware, or may be implemented by hardware executing corresponding software. The hardware or the software includes one or more modules corresponding to the function.

A fourth aspect of embodiments of this application provides a training device. The training device has a function of implementing the method in the second aspect or any one of the possible implementations of the second aspect. The function may be implemented by hardware, or may be implemented by hardware executing corresponding software. The hardware or the software includes one or more modules corresponding to the function.

A fifth aspect of embodiments of this application provides an execution device, and the execution device may include a memory, a processor, and a bus system. The memory is configured to store a program, and the processor is configured to invoke the program stored in the memory to perform the method in the first aspect or any one of the possible implementations of the first aspect of embodiments of this application.

A sixth aspect of embodiments of this application provides a training device, and the training device may include a memory, a processor, and a bus system. The memory is configured to store a program, and the processor is configured to invoke the program stored in the memory to perform the method in the second aspect or any one of the possible implementations of the second aspect of embodiments of this application.

A seventh aspect of this application provides a computer-readable storage medium. The computer-readable storage medium stores instructions, and when the instructions are run on a computer, the computer is enabled to perform the method in the first aspect or any one of the possible implementations of the first aspect; or the computer is enabled to perform the method in the second aspect or any one of the possible implementations of the second aspect.

An eighth aspect of embodiments of this application provides a computer program. When the computer program is run on a computer, the computer is enabled to perform the method in the first aspect or any one of the possible implementations of the first aspect, or the computer is enabled to perform the method in the second aspect or any one of the possible implementations of the second aspect.

A ninth aspect of embodiments of this application provides a chip. The chip includes at least one processor and at least one interface circuit, and the interface circuit is coupled to the processor. The at least one interface circuit is configured to perform a receiving and sending function, and send instructions to the at least one processor. The at least one processor is configured to run a computer program or instructions, and has a function of implementing the method according to the first aspect or any one of the possible implementations of the first aspect, or has a function of implementing the method according to the second aspect or any one of the possible implementations of the second aspect. The function may be implemented by using hardware, or may be implemented by using software, or may be implemented by using a combination of hardware and software. The hardware or the software includes one or more modules corresponding to the function. In addition, the interface circuit is configured to communicate with a module other than the chip. For example, the interface circuit may send, to a target device (for example, a headset, a mobile phone, or a personal computer), a neural network obtained through training on the chip.

## BRIEF DESCRIPTION OF DRAWINGS

FIG. 1A and FIG. 1B are a diagram of a real-time call system based on mobile phones according to an embodiment of this application;

FIG. 2A and FIG. 2B are another diagram of a real-time call system based on mobile phones according to an embodiment of this application;

FIG. 3 is a diagram of a system architecture of a speech signal processing system according to an embodiment of this application;

FIG. 4 is a schematic flowchart of a neural network training method according to an embodiment of this application;

FIG. 5 is an example diagram of a training process according to an embodiment of this application;

FIG. 6 is a schematic flowchart of a speech signal processing method according to an embodiment of this application;

FIG. 7 is a diagram of a structure of an execution device according to an embodiment of this application;

FIG. 8 is a diagram of a structure of a training device according to an embodiment of this application;

FIG. 9 is a diagram of a structure of another execution device according to an embodiment of this application; and

FIG. 10 is a diagram of a structure of another training device according to an embodiment of this application.

## DESCRIPTION OF EMBODIMENTS

Embodiments of this application provide a speech signal processing method, a neural network training method, and a device, to map a transfer function (that is, a first transfer function) of a bone conduction speech signal to a transfer function (that is, a second transfer function) of an air conduction speech signal based on a trained neural network, so as to implement timbre compensation from the bone conduction speech signal to the air conduction speech signal, so that audio listening effect of the bone conduction speech signal is brighter and more comfortable, and call efficiency in high-noise scenarios such as a mine or rescue scenario can be ensured.

In the specification, claims, and accompanying drawings of this application, terms "first", "second", and so on are intended to distinguish between similar objects but do not necessarily indicate a specific order or sequence. It should be understood that the terms used in such a way are interchangeable in proper circumstances, which is merely a discrimination manner that is used when objects having a same attribute are described in embodiments of this application. In addition, terms "include" and "have" and any variations thereof are intended to cover non-exclusive inclusion, so that a process, method, system, product, or device that includes a series of units is not necessarily limited to those units, but may include other units not explicitly listed or inherent to such a process, method, product, or device.

To better understand solutions provided in embodiments of this application, the following first describes terms and concepts related to a neural network in embodiments of this application. It should be understood that related concept explanation may be limited due to specific situations of embodiments of this application, but this does not mean that this application is limited to only these specific situations, and specific situations of different embodiments may differ. This is not specifically limited herein.

(1) Neural network

A neural network may include neural cells, and may be specifically understood as a neural network having an input layer, a hidden layer, and an output layer. Usually, the first layer is the input layer, the last layer is the output layer, and intermediate layers are all hidden layers. A neural network having many hidden layers is referred to as a deep neural network (deep neural network, DNN). Work at each layer of the neural network may be described by using a mathematical expression

$$\vec{y} = a(W \cdot \vec{x} + b)$$

. From a physical perspective, work at each layer of the neural network may be understood as performing transformation from input space to output space (that is, from row space of a matrix to column space of the matrix) through five operations on the input space (a set of input vectors). The five operations include: 1. dimension increase/dimension reduction; 2. scaling up/down; 3. rotation; 4. translation; and 5. "bending". The operations 1, 2, and 3 are performed by "

$$W \cdot \vec{x}$$

", the operation 4 is performed by "+ b", and the operation 5 is implemented by "a( )". The word "space" is used herein for expression because a categorized object is not a single object but a type of object, and the space is a set of all individuals of this type of object, where $W$ is a weight matrix of each layer of the neural network, and each value in the matrix represents a weight value of a neuron of the layer. The matrix $W$ determines the foregoing space transformation from the input space to the output space, that is, $W$ of each layer of the neural network controls a manner of space transformation. An objective of training a neural network is to finally obtain weight matrices of all layers of a trained neural network. Therefore, a training process of the neural network is essentially a manner of learning control of space transformation, and more specifically, learning a weight matrix.

(2) Loss function

In a process of training a neural network, because an output of the neural network is expected to be close, as much as possible, to a predicted value that is really expected, a predicted value of a current network may be compared with a really expected target value, and then a weight matrix of each layer of the neural network is updated based on a difference between the two values (certainly, before the first update, there is usually an initialization process, to be specific, a parameter is preconfigured for each layer of the neural network). For example, if the predicted value of the network is large, the weight matrix is adjusted to make the predicted value smaller, and adjustment is continuously performed, until the neural network can obtain the really expected target value through prediction. Therefore, "how to obtain, through comparison, a difference between the predicted value and the target value" needs to be predefined. This is a loss function (loss function) or an objective function (objective function). The loss function and the objective function are important equations that measure the difference between the predicted value and the target value. The loss function is used as an example. A higher output value (loss) of the loss function indicates a larger difference. Therefore, training of the neural network is a process of minimizing the loss as much as possible.

(3) Back propagation algorithm

During training of a neural network, an error back propagation (back propagation, BP) algorithm may be used to correct a value of a parameter in an initial neural network model, so that a reconstruction error loss of the neural network model becomes smaller. Specifically, an input signal is transferred forward until an error loss occurs at an output, and the parameter in the initial neural network model is updated based on back propagation error loss information, to make the error loss converge. The back propagation algorithm is an error-loss-led back propagation motion intended to obtain a parameter like a weight matrix of an optimal neural network model.

The following describes embodiments of this application with reference to the accompanying drawings. A person of ordinary skill in the art may learn that, with development of technologies and emergence of a new scenario, the technical solutions provided in embodiments of this application are also applicable to a similar technical problem.

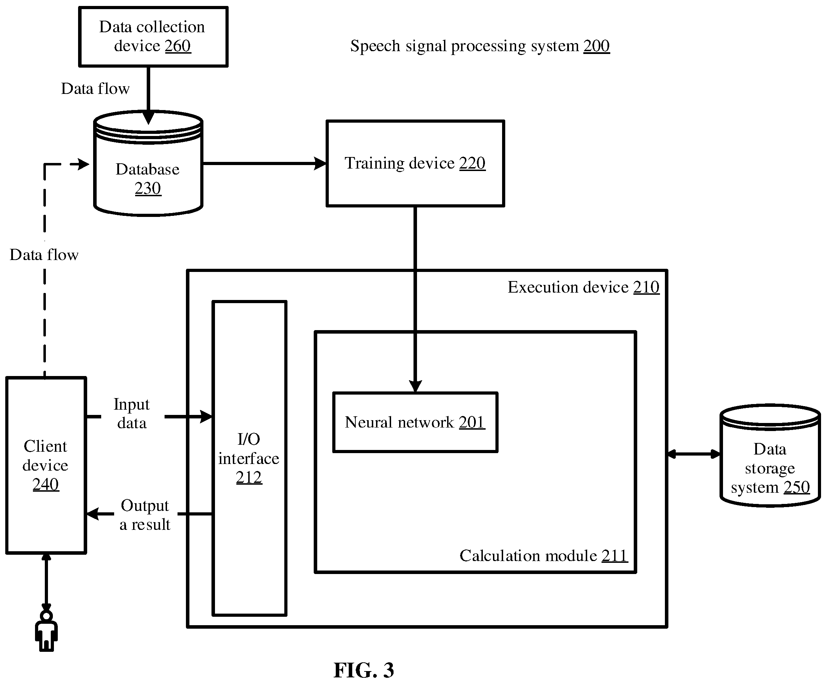

For ease of understanding this solution, a system architecture of a speech signal processing system provided in an embodiment of this application is first described with reference to FIG. 3. FIG. 3 is a diagram of a system architecture of a speech signal processing system according to an embodiment of this application. In FIG. 3, the speech signal processing system 200 includes an execution device 210, a training device 220, a database 230, a client device 240, a data storage system 250, and a data collection device 260 (for example, a bone conduction microphone and an air conduction microphone). The execution device 210 includes a calculation module 211. The data collection device 260 is configured to: obtain a large-scale dataset (that is, a training dataset, which may also be referred to as a training set, and the training set includes training data) required by a user, and store the training set into the database 230. The training device 220 trains, based on the training set maintained in the database 230, a neural network 201 constructed in this application. A trained neural network 201 obtained through training is then applied to the execution device 210. The execution device 210 may invoke data, code, and the like in the data storage system 250, or may store data, instructions, and the like in the data storage system 250. The data storage system 250 may be disposed in the execution device 210, or the data storage system 250 may be an external memory relative to the execution device 210.

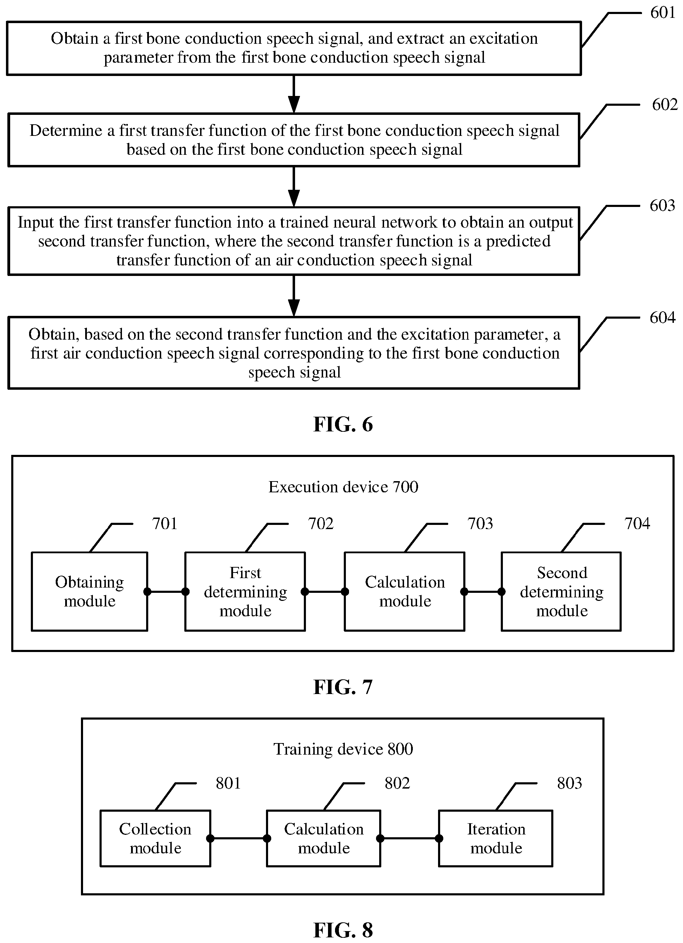

The trained neural network 201 obtained through training by the training device 220 may be applied to different systems or devices (that is, the execution device 210), which may be specifically a terminal-side device or a head-mounted device, for example, a headset, a mobile phone, a tablet, a computer, or a cloud server. In FIG. 6, an I/O interface 212 is configured for the execution device 210, to exchange data with an external device. The "user" may input data to the I/O interface 212 by using the client device 240. For example, the client device 240 may be the bone conduction microphone, and a bone conduction speech signal collected by the client device is input to the execution device 210. The execution device 210 first obtains a true transfer function (that is, a first transfer function described below) of the bone conduction speech signal through calculation, and then inputs the true transfer function into the calculation module 211. The calculation module 211 performs processing on the input true transfer function to obtain a predicted transfer function (that is, a second transfer function described below). Then, the predicted transfer function is stored in a storage medium of the execution device 210 for a subsequent downstream task.

In addition, in some implementations of this application, the client device 240 may alternatively be integrated into the execution device 210. For example, when the execution device 210 is a head-mounted device (for example, a headset), the bone conduction speech signal (for example, a bone conduction speech signal collected by a bone conduction microphone of the head-mounted device, or a bone conduction speech signal emitted from another device and received by the head-mounted device, and a source manner of the bone conduction speech signal is not limited herein) may be directly obtained via the head-mounted device, and then the calculation module 211 in the head-mounted device performs processing on the true transfer function of the bone conduction speech signal, obtains the predicted transfer function, and stores the obtained predicted transfer function. Product forms of the execution device 210 and the client device 240 are not limited herein.

It should be further noted that, in some other implementations of this application, the data collection device 260 and/or the training device 220 may alternatively be integrated into the execution device 210. For example, when the execution device 210 is a head-mounted device (like a headset), timbre and the like of bone conduction speech signals collected when different persons wear the head-mounted device may also be different. Therefore, the data collection device 260 and/or the training device 220 may be integrated into the execution device 210. When a user A wears the head-mounted device, the data collection device 260 (for example, the bone conduction microphone) collects a voice of the user A, and the neural network 201 is trained by using the training device 220 (a true transfer function of an air conduction speech signal is obtained based on the air conduction speech signal collected by the air conduction microphone). The trained neural network 201 is directly used for subsequent application of the user A. Similarly, when a user B wears the head-mounted device, the data collection device 260 (for example, the bone conduction microphone) collects a voice of the user B. In addition, the neural network 201 is trained by using the training device 220, and the trained neural network 201 is directly used for subsequent application of the user A. In this way, the trained neural network 201 can be more accurate, and can be adapted when different users use the execution device 210. This is flexible.

It should be noted that FIG. 3 is merely a diagram of a system architecture according to an embodiment of this application. A location relationship between devices, components, modules, and the like shown in the figure does not constitute any limitation. For example, in FIG. 3, the data storage system 250 is an external memory relative to the execution device 210. In another case, the data storage system 250 may alternatively be disposed in the execution device 210. In FIG. 3, the client device 240 is an external device relative to the execution device 210. In another case, the client device 240 may alternatively be integrated into the execution device 210. In FIG. 3, the training device 220 is an external device relative to the execution device 210. In another case, the training device 220 may alternatively be integrated into the execution device 210. In FIG. 3, the data collection device 260 is an external device relative to the execution device 210. In another case, the data collection device 260 may alternatively be integrated into the execution device 210. This is not limited in this application.

Application of a neural network is generally divided into two phases: a training phase and an application phase (which may also be referred to as an inference phase). The following separately describes, from the two phases, specific procedures of a neural network training method and a speech signal processing method provided in embodiments of this application.

1. Training phase

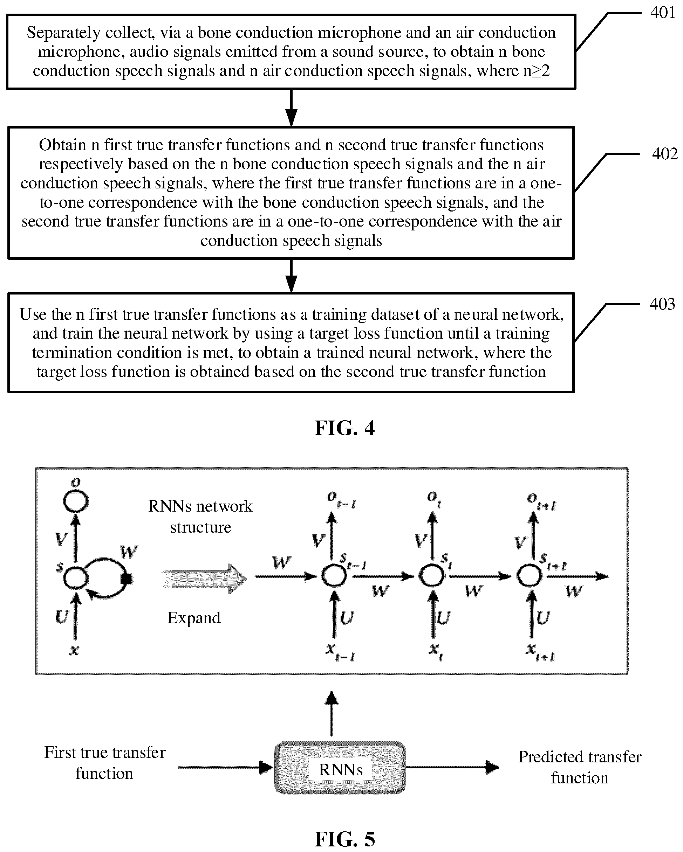

In this embodiment of this application, the training phase is a process in which the data collection device 260 in FIG. 3 collects training data and the training device 220 performs a training operation on the neural network 201 based on the training data. Specifically, FIG. 4 is a schematic flowchart of a neural network training method according to an embodiment of this application. The method may specifically include the following steps.

401: Separately collect, via a bone conduction microphone and an air conduction microphone, audio signals emitted from a sound source, to obtain n bone conduction speech signals and n air conduction speech signals, where $n \geq 2$.

First, the audio signals emitted from the sound source (for example, a user A) may be separately collected via the bone conduction microphone and the air conduction microphone within specific duration. For example, $n$ ($n \geq 2$) bone conduction speech signals $s(t)$ and $n$ air conduction speech signals $y(t)$ that are emitted from the user A when the user A speaks may be collected.

402: Obtain n first true transfer functions and n second true transfer functions respectively based on the n bone conduction speech signals and the n air conduction speech signals, where the first true transfer functions are in a one-to-one correspondence with the bone conduction speech signals, and the second true transfer functions are in a one-to-one correspondence with the air conduction speech signals.

Then, a true transfer function $h_b(t)$ (which may be referred to as a first true transfer function $h_b(t)$) corresponding to each bone conduction speech signal $s(t)$ may be further obtained based on the bone conduction speech signal $s(t)$, and a total of n first true transfer functions $h_b(t)$ may be obtained based on the n bone conduction speech signals $s(t)$. Similarly, a true transfer function $h_b(t)$ (which may be referred to as a second true transfer function $h_y(t)$) corresponding to each air conduction speech signal $y(t)$ may be further obtained based on the air conduction speech signal $y(t)$, and a total of n second true transfer functions $h_b(t)$ may be obtained based on the n air conduction speech signals $y(t)$.

403: Use the n first true transfer functions as a training dataset of a neural network, and train the neural network by using a target loss function until a training termination condition is met, to obtain a trained neural network, where the target loss function is obtained based on the second true transfer function.

The n first true transfer functions $h_b(t)$ are used as the training dataset of the neural network, and the neural network is trained based on a target loss function L until the training termination condition is met, to obtain the trained neural network. The target loss function is obtained based on the second true transfer function. In an example, the target loss function L may be an error value between a predicted transfer function output by the neural network and the second true transfer function.

Specifically, the training process may be as follows: The first true transfer function $h_b(t)$ is used as an input of the neural network, and an output of the neural network is a predicted transfer function $h_c(t)$, and then iterative training is performed continuously until the training termination condition is met, where the target loss function $L=|h_c(t)-h_y(t)|$. In an example, FIG. 5 shows a relationship between input data (that is, training data) and an output (that is, a predicted transfer function) of RNNs by using recurrent neural networks (recurrent neural networks, RNNs) as an example.

It should be noted that, in some implementations of this application, that the training termination condition is met includes but is not limited to the following:

(1) The target loss function reaches a preset threshold.

After the target loss function is configured, a threshold (for example, 0.03) may be preset for the target loss function. In a process of performing iterative training on the neural network, whether a value of a target loss function obtained through a current round of training reaches the threshold is determined after each round of training is completed. If the preset threshold is not reached, the training continues. If the preset threshold is reached, the training is terminated. In this case, a value of a network parameter of a neural network determined in the current round of training is used as a value of a network parameter of a finally trained neural network.

(2) The adjusted target loss function begins to converge.

After the target loss function is configured, iterative training may be performed on the neural network. If a difference between a value of a target loss function obtained through a current round of training and a value of a target loss function obtained through a previous round of training falls within a preset range (for example, 0.01), it is considered that the target loss function converges, and the training may be terminated. In this case, a value of a network parameter of the neural network determined in the current round of training is used as a value of a network parameter of a finally trained neural network.

(3) Training reaches a preset quantity of times.

In this manner, a quantity (for example, 100) of times of iterative training on the neural network may be preconfigured. After the target loss function is configured, iterative training may be performed on the neural network. After each round of training is completed, a value of a network parameter of a neural network corresponding to the current round is stored until a quantity of times of iterative training reaches the preset quantity of times. Then, a neural network obtained through each round of training is verified based on test data, and a value of a network parameter with best performance is selected as a value of a final network parameter of the neural network.

(4) Training duration reaches preset duration.

In this manner, iteration duration (for example, 5 minutes) of training on the neural network may be preconfigured. After the target loss function is configured, iterative training may be performed on the neural network. After each round of training is completed, a value of a network parameter of a neural network corresponding to the current round of training is stored until iteration duration of training reaches the preset duration. Then, a neural network obtained through each round of training is verified based on test data, and a value of a network parameter with best performance is selected as a value of a final network parameter of the neural network.

(5) A training termination instruction is obtained.

In this manner, a training switch may be preset to trigger generation of a training start instruction and a training end instruction. When the training switch is turned on, generation of the training start instruction is triggered, and iterative training on the neural network starts. When the training switch is turned off, generation of the training end instruction is triggered, and training on the neural network stops. Duration from turning on the training switch to turning off the training switch is training duration of the neural network. After the target loss function is configured, iterative training on the neural network may be performed by turning on or turning off the training switch. After each round of training is completed, a value of a network parameter of a neural network corresponding to the round of training is stored until the training switch is turned off. Then, a neural network obtained through each round of training is verified based on test data, and a value of a network parameter with best performance is selected as a value of a final network parameter of the neural network.

It should be further noted that, in this embodiment of this application, the n bone conduction speech signals s(t) and the n air conduction speech signals y(t) may be collected at the beginning, and then iterative training is performed on the neural network based on the collected n bone conduction speech signals s(t) and the collected n air conduction speech signals y(t) (that is, required training data is first collected, and then the neural network is trained). Alternatively, the neural network may be trained once after one bone conduction speech signal s(t) and one air conduction speech signal y(t) are collected. If a neural network obtained through a current round of training does not meet the training termination condition, the process in which training data is collected once again and training is performed once again continues until the training termination condition is obtained (that is, a quantity of iterations is a quantity of collections). Specifically, a sequence between data collection and training is not limited in this application.

It should be noted that, in some implementations of this application, the bone conduction microphone and the air conduction microphone may be deployed in a same device, for example, may be both deployed in a head-mounted device (for example, a headset). A training process of the neural network may alternatively be performed on the device, that is, the training device is the device. In this case, the training process of the neural network is an online training process. In an example, an implementation process of the online training process may be as follows:

(1) First, a wearer wears the head-mounted device (for example, the headset).

② An online training switch is enabled. When the wearer turns on the switch, the head-mounted device is triggered to start training.

③ With online training is enabled, the wearer speaks, and the head-mounted device simultaneously collects a bone conduction speech signal $s(t)$ and an air conduction speech signal $y(t)$ of the wearer via the bone conduction microphone and the air conduction microphone.

④ The online training switch is turned off. When the wearer turns off the switch, the head-mounted device is triggered to terminate training (that is, the training termination condition is that the training termination instruction is obtained). Duration from turning on the online training switch to turning off the online training switch is training duration of the neural network. The head-mounted device uses, within the duration, the first true transfer function $h_b(t)$ corresponding to the bone conduction speech signal $s(t)$ as an input of the neural network, and an output of the neural network is the predicted transfer function $h_c(t)$. Then iterative training is performed continuously, and a network parameter (or an optimal network parameter in all times) of the neural network obtained last time when the online training switch is turned off is saved as a final network parameter of the neural network.

It should be noted that, in some implementations of this application, the online training process of the neural network may not be performed on the same device in which the bone conduction microphone and the air conduction microphone are deployed. In an example, it is assumed that the online training process of the neural network is performed on an online training module, and the device is the headset. The online training module may be deployed in the headset, or may be deployed in another device like a mobile phone, a computer, or a cloud server: a. If the online training module is deployed in the headset, a system needs to send a signal of the air conduction microphone to the headset; or b. If the online training module is deployed in the another device, a system sends a signal of the bone conduction microphone to the headset. Therefore, a trained neural network may be stored on the headset, or may be stored on another device. a. If the trained neural network is stored on the headset, after the neural network is trained on the another device, the trained neural network needs to be sent to the headset for storage. b. If the trained neural network is stored on the another device, after the neural network is trained on the headset, the trained neural network may be sent to the another device for storage, and the trained neural network is obtained from the another device when the trained neural network needs to be used.

It should be noted that, in some implementations of this application, the training process of the neural network may alternatively be an offline training process (that is, the neural network is trained in advance). In an example, an implementation process of the offline training process may be as follows:

① The audio signals emitted from the sound source are simultaneously collected via the bone conduction microphone and the air conduction microphone, to obtain the bone conduction speech signal $s(t)$ and the air conduction speech signal $y(t)$.

② The first true transfer function $h_b(t)$ corresponding to the bone conduction speech signal $s(t)$ is used as an input of the neural network, an output of the neural network is the predicted transfer function $h_c(t)$, and iterative training is performed continuously until a training termination condition is met. A network parameter (or an optimal network parameter in all times) of the neural network obtained last time is stored as a final network parameter of the neural network.

2. Application phase

In this embodiment of this application, the application phase is a process in which the execution device 210 in FIG. 3 performs processing on input data by using the trained neural network 201. Specifically, FIG. 6 is a schematic flowchart of a speech signal processing method according to an embodiment of this application. The method may specifically include the following steps.

601: Obtain a first bone conduction speech signal, and extract an excitation parameter from the first bone conduction speech signal.

First, a to-be-processed bone conduction speech signal $s(t)$ is obtained. The bone conduction speech signal $s(t)$ may be referred to as a first bone conduction speech signal $s(t)$. Then, an excitation parameter $e(t)$ is extracted from the first bone conduction speech signal $s(t)$. The excitation parameter $e(t)$ may include a fundamental frequency of the first bone conduction speech signal s(t) and a harmonic of the fundamental frequency, and may be obtained through analysis by using a linear prediction (linear predictive coding, LPC) method of a speech signal.

Optionally, in some implementations of this application, an implementation of obtaining the first bone conduction speech signal s(t) may be as follows: First, an audio signal x(t) (which may also be referred to as a bone conduction audio signal x(t)) may be collected via a bone conduction microphone, and then noise reduction is performed on the audio signal x(t) to obtain the first bone conduction speech signal s(t). For example, noise reduction may be performed by using a spectral subtraction noise reduction algorithm, which specifically includes the following several steps. (1) Calculate a noise spectrum of the audio signal x(t): Voice activity detection (voice activity detection, VAD) is first performed on the audio signal x(t), a non-voice part n(t) is obtained, and fast Fourier transform (fast Fourier transform, FFT) is performed on the non-voice part n(t) to obtain N(w), that is, a background noise spectrum. (2) Noise reduction: FFT transform is performed on the audio signal x(t) to obtain X(w), and then the background noise spectrum N(w) is subtracted to obtain a signal spectrum S(w) of a pure speech signal, that is, S(w)=X(w)-N(w). Then, inverse fast Fourier transform (inverse fast Fourier transform, IFFT) is performed on S(w) to obtain the first bone conduction speech signal s(t), that is, a clean speech signal obtained through noise reduction.

602: Determine a first transfer function of the first bone conduction speech signal based on the first bone conduction speech signal.

Then, a transfer function $h_b(t)$ of the first bone conduction speech signal s(t) is determined based on the first bone conduction speech signal s(t), which may also be referred to as a first transfer function $h_b(t)$. Specifically, a deconvolution operation may be performed on the first bone conduction speech signal s(t) based on the obtained excitation parameter e(t), to obtain the first transfer function $h_b(t)$ of the first bone conduction speech signal s(t), that is, $h_b(t) = e^{-1}(t)*s(t)$.

603: Input the first transfer function into a trained neural network to obtain an output second transfer function, where the second transfer function is a predicted transfer function of an air conduction speech signal.

After the first transfer function $h_b(t)$ of the first bone conduction speech signal s(t) is obtained, the first transfer function $h_b(t)$ is input to the trained neural network, to output a second transfer function $h_c(t)$. The second transfer function $h_c(t)$ is the predicted transfer function of the air conduction speech signal, and therefore may also be referred to as a predicted transfer function $h_c(t)$.

It should be noted that, in this embodiment of this application, the trained neural network is a trained neural network obtained in the foregoing training phase, that is, the trained neural network is obtained by training a neural network based on a target loss function by using a training dataset. The training dataset includes a plurality of pieces of training data (including a first true transfer function of the bone conduction speech signal), and the first true transfer function is obtained based on an audio signal that is emitted from a sound source and that is collected by the bone conduction microphone. An output of the neural network is the predicted transfer function, the predicted transfer function corresponds to a second true transfer function of the air conduction speech signal, and the second true transfer function is obtained based on an audio signal that is emitted from the sound source and that is collected by an air conduction microphone. Optionally, the target loss function may be an error value between the predicted transfer function output by the neural network and the second true transfer function.

604: Obtain, based on the second transfer function and the excitation parameter, a first air conduction speech signal corresponding to the first bone conduction speech signal.

Finally, a first air conduction speech signal s'(t) corresponding to the first bone conduction speech signal s(t) is obtained based on the second transfer function $h_c(t)$ output by the neural network and the pre-determined excitation parameter e(t). Specifically, a convolution operation may be performed on the second transfer function $h_c(t)$ and the excitation parameter e(t), to obtain the first air conduction speech signal s'(t), that is, $s'(t)=e(t)*h_c(t)$, corresponding to the first bone conduction speech signal s(t).

It should be noted that, in some implementations of this application, subsequent processing is performed based on the speech signal (that is, the first air conduction speech signal s'(t)) obtained through timbre compensation. The subsequent processing includes but is not limited to the following:

(1) Voice call: Voice brightness after a call is enhanced, perceived voice quality is better, perception of the other party is not affected, and perceived brightness and comfort of the voice are improved.
(2) Voice recognition: Accuracy of voice recognition in a bone conduction voice is improved.
(3) Voiceprint recognition: Accuracy of voiceprint recognition in a bone conduction voice is improved.

Based on the foregoing embodiments, the following further provides a related device used to implement the solutions, to better implement the solutions in embodiments of this application. Specifically, FIG. 7 is a diagram of a structure of an execution device according to an embodiment of this application. The execution device 700 may specifically include an obtaining module 701, a first determining module 702, a calculation module 703, and a second determining module 704. The obtaining module 701 is configured to obtain a first bone conduction speech signal, and extract an excitation parameter from the first bone conduction speech signal. The first determining module 702 is configured to determine a first transfer function of the first bone conduction speech signal based on the first bone conduction speech signal. The calculation module 703 is configured to input the first transfer function into a trained neural network to obtain an output second transfer function, where the second transfer function is a predicted transfer function of an air conduction speech signal. The second determining module 704 is configured to obtain, based on the second transfer function and the excitation parameter, a first air conduction speech signal corresponding to the first bone conduction speech signal.

In a possible design, the trained neural network is obtained by training a neural network based on a target loss function by using a training dataset. The training dataset includes a plurality of pieces of training data, the training data includes a first true transfer function of a bone conduction speech signal, and the first true transfer function is obtained based on an audio signal that is emitted from a sound source and that is collected by a bone conduction microphone. An output of the neural network is a predicted transfer function, the predicted transfer function corresponds to a second true transfer function of the air conduction speech signal, and the second true transfer function is obtained based on an audio signal that is emitted from the sound source and that is collected by an air conduction microphone.

In a possible design, the target loss function includes an error value between the predicted transfer function and the second true transfer function.

In a possible design, the first determining module 702 is specifically configured to perform a deconvolution operation on the first bone conduction speech signal based on the excitation parameter, to obtain the first transfer function of the first bone conduction speech signal.

In a possible design, the second determining module 704 is specifically configured to perform a convolution operation on the second transfer function and the excitation parameter, to obtain the first air conduction speech signal corresponding to the first bone conduction speech signal.

In a possible design, the obtaining module 701 is specifically configured to: collect an audio signal via the bone conduction microphone, and perform noise reduction on the audio signal to obtain the first bone conduction speech signal.

In a possible design, the excitation parameter includes a fundamental frequency of the first bone conduction speech signal and a harmonic of the fundamental frequency.

It should be noted that content such as information exchange and an execution process between the modules/units in the execution device 700 is based on a same concept as the method embodiment corresponding to FIG. 6 in this application. For specific content, refer to the descriptions in the foregoing method embodiments of this application. Details are not described herein again.

An embodiment of this application further provides a training device. Specifically, FIG. 8 is a diagram of a training device according to an embodiment of this application. The training device 800 may specifically include a collection module 801, a calculation module 802, and an iteration module 803. The collection module 801 is configured to separately collect, via a bone conduction microphone and an air conduction microphone, audio signals emitted from a sound source, to obtain n bone conduction speech signals and n air conduction speech signals, where n≥2. The calculation module 802 is configured to obtain n first true transfer functions and n second true transfer functions respectively based on the n bone conduction speech signals and the n air conduction speech signals. The first true transfer functions are in a one-to-one correspondence with the bone conduction speech signals, and the second true transfer functions are in a one-to-one correspondence with the air conduction speech signals. The iteration module 803 is configured to use the n first true transfer functions as a training dataset of a neural network, and train the neural network by using a target loss function until a training termination condition is met, to obtain a trained neural network. The target loss function is obtained based on the second true transfer function.

In a possible design, the bone conduction microphone and the air conduction microphone are deployed in the training device 800.

In a possible design, the training device 800 includes a head-mounted device.

In a possible design, an output of the neural network is a predicted transfer function, and the target loss function includes an error value between the predicted transfer function and the second true transfer function.

In a possible design, that the training termination condition is met includes: A value of the target loss function reaches a preset threshold; or the target loss function begins to converge; or a quantity of training times reaches a preset quantity of times; or training duration reaches preset duration; or a training termination instruction is obtained.

It should be noted that content such as information exchange and an execution process between the modules/units in the training device 800 is based on a same concept as the method embodiment corresponding to FIG. 4 in this application. For specific content, refer to the descriptions in the foregoing method embodiments of this application. Details are not described herein again.

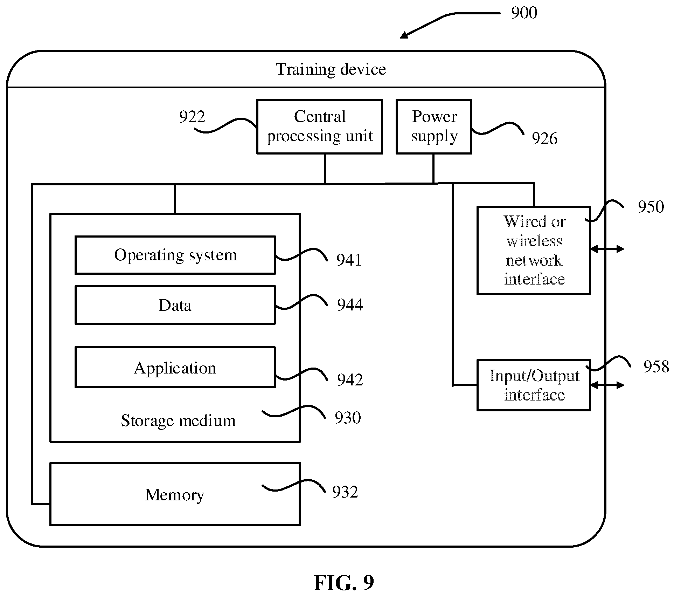

The following describes another training device provided in an embodiment of this application. FIG. 9 is a diagram of a structure of a training device according to an embodiment of this application. The training device 800 described in the embodiment corresponding to FIG. 8 may be deployed in the training device 900, and is configured to implement a function of the training device 800 in the embodiment corresponding to FIG. 8. Specifically, the training device 900 is implemented by one or more servers. The training device 900 may vary greatly due to different configurations or performance, and may include one or more central processing units (central processing units, CPU) 922 and a memory 932, one or more storage media 930 (for example, one or more mass storage devices) that store an application 942 or data 944. The memory 932 and the storage medium 930 may be transitory storage or persistent storage. A program stored in the storage medium 930 may include one or more modules (not shown in the figure), and each module may include a series of instruction operations for the training device 900. Further, the central processing unit 922 may be configured to communicate with the storage medium 930, and perform, on the training device 900, the series of instruction operations in the storage medium 930.

The training device 900 may further include one or more power supplies 926, one or more wired or wireless network interfaces 950, one or more input/output interfaces 958, and/or one or more operating systems 941, such as Windows ServerTM, Mac OS XTM, UnixTM, LinuxTM, and FreeBSDTM.

In this embodiment of this application, the central processing unit 922 is configured to perform the neural network training method in the embodiment corresponding to FIG. 4. For example, the central processing unit 922 may be configured to: first separately collect, via a bone conduction microphone and an air conduction microphone, audio signals emitted from a sound source, to obtain n bone conduction speech signals and n air conduction speech signals, where $n \geq 2$; and then obtain n first true transfer functions and n second true transfer functions respectively based on the n bone conduction speech signals and the n air conduction speech signals, where the first true transfer functions are in a one-to-one correspondence with the bone conduction speech signals, and the second true transfer functions are in a one-to-one correspondence with the air conduction speech signals; and finally, use the n first true transfer functions as a training dataset of a neural network, and train the neural network by using a target loss function until a training termination condition is met, to obtain a trained neural network, where the target loss function is obtained based on the second true transfer function.

It should be noted that a specific manner in which the central processing unit 922 performs the foregoing steps is based on a same concept as the method embodiment corresponding to FIG. 4 in this application, and technical effect brought by the specific manner is also the same as that in the foregoing embodiment of this application. For specific content, refer to the descriptions in the foregoing method embodiments of this application. Details are not described herein again.

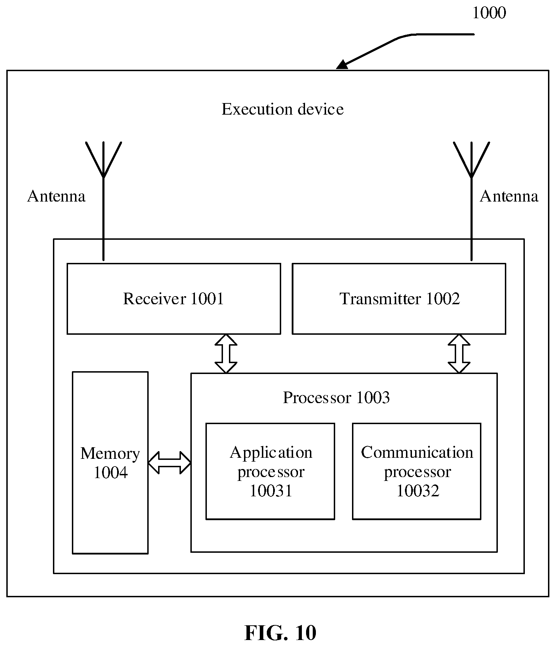

The following describes an execution device according to an embodiment of this application. FIG. 10 is a diagram of a structure of an execution device according to an embodiment of this application. The execution device 1000 may be specifically represented as various terminal devices, such as a head-mounted device (like a headset), a mobile phone, a tablet, and a notebook computer. This is not limited herein. The execution device 700 described in the embodiment corresponding to FIG. 7 may be deployed in the execution device 1000, and is configured to implement a function of the execution device 700 in the embodiment corresponding to FIG. 7. Specifically, the execution device 1000 may include a receiver 1001, a transmitter 1002, a processor 1003, and a memory 1004 (there may be one or more processors 1003 in the execution device 1000, and one processor is used as an example in FIG. 10). The processor 1003 may include an application processor 10031 and a communication processor 10032. In some embodiments of this application, the receiver 1001, the transmitter 1002, the processor 1003, and the memory 1004 may be connected through a bus or in another manner.

The memory 1004 may include a read-only memory and a random access memory, and provide instructions and data for the processor 1003. A part of the memory 1004 may further include a non-volatile random access memory (non-volatile random access memory, NVRAM). The memory 1004 stores a processor and operation instructions, an executable module or a data structure, a subnet thereof, or an extended set thereof. The operation instructions may include various operation instructions for various operations.

The processor 1003 controls an operation of the execution device 1000. In specific application, components of the execution device 1000 are coupled together through a bus system. In addition to a data bus, the bus system may further include a power bus, a control bus, a status signal bus, and the like. However, for clear description, various types of buses in the figure are marked as the bus system.

The method disclosed in the embodiment corresponding to FIG. 6 in this application may be applied to the processor 1003 or implemented by the processor 1003. The processor 1003 may be an integrated circuit chip, and have a signal processing capability. In an implementation process, steps in the method can be implemented by using a hardware integrated logical circuit in the processor 1003, or by using instructions in a form of software. The processor 1003 may be a general-purpose processor, a digital signal processor (digital signal processor, DSP), a microprocessor, or a microcontroller. The processor 1003 may further include an application-specific integrated circuit (application-specific integrated circuit, ASIC), a field-programmable gate array (field-programmable gate array, FPGA) or another programmable logic device, a discrete gate, or a transistor logic device, or a discrete hardware component. The processor 1003 may implement or perform the methods, steps, and logical block diagrams that are disclosed in the embodiment corresponding to FIG. 6 in this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. The software module may be located in a mature storage medium in the art, for example, a random access memory, a flash memory, a read-only memory, a programmable read-only memory, an electrically erasable programmable memory, or a register. The storage medium is located in the memory 1004, and the processor 1003 reads information in the memory 1004 and completes the steps in the foregoing methods in combination with hardware of the processor.

The receiver 1001 may be configured to receive input digital or character information, and generate a signal input related to setting and function control of the execution device 1000. The transmitter 1002 may be configured to output the digital or character information through a first interface. The transmitter 1002 may be configured to send instructions to a disk group through the first interface, to modify data in the disk group. The transmitter 1002 may further include a display device like a display.

In this embodiment of this application, in a case, the processor 1003 is configured to process, by using a trained neural network, a first transfer function of an input first bone conduction speech signal, to obtain a corresponding second transfer function. The trained neural network may be obtained by using the training method corresponding to FIG. 4 in this application. For specific content, refer to the description in the foregoing method embodiments of this application. Details are not described herein again.

An embodiment of this application further provides a computer-readable storage medium. The computer-readable storage medium stores a program used to perform signal processing. When the program is run on a computer, the computer is enabled to perform steps performed by the training device described in the embodiment shown in FIG. 4, or the computer is enabled to perform steps performed by the execution device described in the embodiment shown in FIG. 6.

The training device, the execution device, or the like provided in embodiments of this application may be specifically a chip. The chip includes a processing unit and a communication unit. For example, the processing unit may be a processor, and the communication unit may be an input/output interface, a pin, or a circuit. The processing unit may execute computer executable instructions stored in a storage unit, so that the chip in the training device performs the steps performed by the training device described in the embodiment shown in FIG. 4, or the chip in the execution device performs the steps performed by the execution device described in the embodiment shown in FIG. 6.

Optionally, the storage unit is a storage unit in the chip, for example, a register or a cache. Alternatively, the storage unit may be a storage unit in a wireless access device end but outside the chip, for example, a read-only memory (read-only memory, ROM), another type of static storage device that can store static information and instructions, or a random access memory (random access memory, RAM).

In addition, it should be noted that the described apparatus embodiment is merely an example. The units described as separate parts may or may not be physically separate, and parts displayed as units may or may not be physical units, may be located in one position, or may be distributed on a plurality of network units. Some or all the modules may be selected according to actual needs to achieve objectives of the solutions of embodiments. In addition, in the accompanying drawings of the apparatus embodiments provided by this application, connection relationships between modules indicate that the modules have communication connections with each other, which may be specifically implemented as one or more communication buses or signal cables.

Based on the description of the foregoing implementations, a person skilled in the art may clearly understand that this application may be implemented by software in addition to necessary universal hardware, or by dedicated hardware, including a dedicated integrated circuit, a dedicated CPU, a dedicated memory, a dedicated component, and the like. Generally, any function that can be performed by a computer program can be easily implemented by using corresponding hardware. Moreover, a specific hardware structure used to achieve a same function may be in various forms, for example, in a form of an analog circuit, a digital circuit, or a dedicated circuit. However, as for this application, software program implementation is a better implementation in most cases. Based on such an understanding, the technical solutions of this application essentially or the part contributing to the conventional technology may be implemented in a form of a software product. The computer software product is stored in a readable storage medium, for example, a floppy disk, a USB flash drive, a removable hard disk, a ROM, a RAM, a magnetic disk, or an optical disc of a computer, and includes several instructions for instructing a computer device (which may be a personal computer, a training device, or an execution device) to perform the methods described in embodiments of this application.

The computer program product includes one or more computer instructions. When the computer program instructions are loaded and executed on the computer, the procedure or functions according to embodiments of this application are all or partially generated. The computer may be a general-purpose computer, a special-purpose computer, a computer network, or another programmable apparatus. The computer instructions may be stored in a computer-readable storage medium, or may be transmitted from a computer-readable storage medium to another computer-readable storage medium. For example, the computer instructions may be transmitted from a website, a computer, a training device, or a data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium that can be stored by a computer, or a data storage device, like a training device or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state disk, SSD)), or the like.

**Claims**

1. A speech signal processing method, comprising:

   obtaining a first bone conduction speech signal, and extracting an excitation parameter from the first bone conduction speech signal;
   determining a first transfer function of the first bone conduction speech signal based on the first bone conduction speech signal;
   inputting the first transfer function into a trained neural network to obtain an output second transfer function, wherein the second transfer function is a predicted transfer function of an air conduction speech signal; and
   obtaining, based on the second transfer function and the excitation parameter, a first air conduction speech signal corresponding to the first bone conduction speech signal.

2. The method according to claim 1, wherein

   the trained neural network is obtained by training a neural network based on a target loss function by using a training dataset;
   the training dataset comprises a plurality of pieces of training data, the training data comprises a first true transfer function of the bone conduction speech signal, and the first true transfer function is obtained based on an audio signal that is emitted from a sound source and that is collected by a bone conduction microphone; and
   an output of the neural network is a predicted transfer function, the predicted transfer function corresponds to a second true transfer function of the air conduction speech signal, and the second true transfer function is obtained based on an audio signal that is emitted from the sound source and that is collected by an air conduction microphone.

3. The method according to claim 2, wherein the target loss function comprises:
   an error value between the predicted transfer function and the second true transfer function.

4. The method according to any one of claims 1 to 3, wherein the determining a first transfer function of the first bone conduction speech signal based on the first bone conduction speech signal comprises:
   performing a deconvolution operation on the first bone conduction speech signal based on the excitation parameter, to obtain the first transfer function of the first bone conduction speech signal.

5. The method according to any one of claims 1 to 4, wherein the obtaining, based on the second transfer function and the excitation parameter, a first air conduction speech signal corresponding to the first bone conduction speech signal comprises:
   performing a convolution operation on the second transfer function and the excitation parameter, to obtain the first air conduction speech signal corresponding to the first bone conduction speech signal.

6. The method according to any one of claims 1 to 5, wherein the obtaining a first bone conduction speech signal comprises:

   collecting an audio signal via the bone conduction microphone; and
   performing noise reduction on the audio signal to obtain the first bone conduction speech signal.

7. The method according to any one of claims 1 to 6, wherein the excitation parameter comprises a fundamental frequency of the first bone conduction speech signal and a harmonic of the fundamental frequency.

8. A neural network training method, comprising:

   separately collecting, via a bone conduction microphone and an air conduction microphone, audio signals emitted from a sound source, to obtain n bone conduction speech signals and n air conduction speech signals, wherein n≥2;
   obtaining n first true transfer functions and n second true transfer functions respectively based on the n bone conduction speech signals and the n air conduction speech signals, wherein the first true transfer functions are in a one-to-one correspondence with the bone conduction speech signals, and the second true transfer functions are in a one-to-one correspondence with the air conduction speech signals; and
   using the n first true transfer functions as a training dataset of a neural network, and training the neural network by using a target loss function until a training termination condition is met, to obtain a trained neural network, wherein the target loss function is obtained based on the second true transfer function.

9. The method according to claim 8, wherein the bone conduction microphone and the air conduction microphone are deployed in a same device, and a training process of the neural network is performed on the device.

10. The method according to claim 9, wherein the device comprises:
a head-mounted device.

11. The method according to any one of claims 8 to 10, wherein an output of the neural network is a predicted transfer function, and the target loss function comprises:
an error value between the predicted transfer function and the second true transfer function.

12. The method according to any one of claims 8 to 11, wherein that the training termination condition is met comprises:

a value of the target loss function reaches a preset threshold;
or
the target loss function begins to converge;
or
a quantity of training times reaches a preset quantity of times;
or
training duration reaches preset duration;
or
a training termination instruction is obtained.

13. An execution device, comprising:

an obtaining module, configured to obtain a first bone conduction speech signal, and extract an excitation parameter from the first bone conduction speech signal;
a first determining module, configured to determine a first transfer function of the first bone conduction speech signal based on the first bone conduction speech signal;
a calculation module, configured to input the first transfer function into a trained neural network to obtain an output second transfer function, wherein the second transfer function is a predicted transfer function of an air conduction speech signal; and
a second determining module, configured to obtain, based on the second transfer function and the excitation parameter, a first air conduction speech signal corresponding to the first bone conduction speech signal.

14. The device according to claim 13, wherein

the trained neural network is obtained by training a neural network based on a target loss function by using a training dataset;
the training dataset comprises a plurality of pieces of training data, the training data comprises a first true transfer function of the bone conduction speech signal, and the first true transfer function is obtained based on an audio signal that is emitted from a sound source and that is collected by a bone conduction microphone; and
an output of the neural network is a predicted transfer function, the predicted transfer function corresponds to a second true transfer function of the air conduction speech signal, and the second true transfer function is obtained based on an audio signal that is emitted from the sound source and that is collected by an air conduction microphone.

15. The device according to claim 13, wherein the target loss function comprises:
an error value between the predicted transfer function and the second true transfer function.

16. The device according to any one of claims 13 to 15, wherein the first determining module is specifically configured to:
perform a deconvolution operation on the first bone conduction speech signal based on the excitation parameter, to obtain the first transfer function of the first bone conduction speech signal.

17. The device according to any one of claims 13 to 16, wherein the second determining module is specifically configured to:
perform a convolution operation on the second transfer function and the excitation parameter, to obtain the first air conduction speech signal corresponding to the first bone conduction speech signal.

18. The device according to any one of claims 13 to 17, wherein the obtaining module is specifically configured to:

collect an audio signal via the bone conduction microphone; and
perform noise reduction on the audio signal to obtain the first bone conduction speech signal.

19. The device according to any one of claims 13 to 18, wherein the excitation parameter comprises a fundamental frequency of the first bone conduction speech signal and a harmonic of the fundamental frequency.

**20.** A training device, comprising:

a collection module, configured to separately collect, via a bone conduction microphone and an air conduction microphone, audio signals emitted from a sound source, to obtain n bone conduction speech signals and n air conduction speech signals, wherein n≥2;

a calculation module, configured to obtain n first true transfer functions and n second true transfer functions respectively based on the n bone conduction speech signals and the n air conduction speech signals, wherein the first true transfer functions are in a one-to-one correspondence with the bone conduction speech signals, and the second true transfer functions are in a one-to-one correspondence with the air conduction speech signals; and

an iteration module, configured to use the n first true transfer functions as a training dataset of a neural network, and train the neural network by using a target loss function until a training termination condition is met, to obtain a trained neural network, wherein the target loss function is obtained based on the second true transfer function.

**21.** The device according to claim 20, wherein the bone conduction microphone and the air conduction microphone are deployed in the training device.

**22.** The device according to claim 21, wherein the training device comprises:
a head-mounted device.

**23.** The device according to any one of claims 20 to 22, wherein an output of the neural network is a predicted transfer function, and the target loss function comprises:
an error value between the predicted transfer function and the second true transfer function.

**24.** The device according to any one of claims 20 to 23, wherein that the training termination condition is met comprises:

a value of the target loss function reaches a preset threshold;
or
the target loss function begins to converge;
or
a quantity of training times reaches a preset quantity of times;
or
training duration reaches preset duration;
or
a training termination instruction is obtained.

**25.** An execution device, comprising a processor and a memory, wherein the processor is coupled to the memory;

the memory is configured to store a program; and
the processor is configured to execute the program in the memory, so that the execution device performs the method according to any one of claims 1 to 7.

**26.** A training device, comprising a processor and a memory, wherein the processor is coupled to the memory;

the memory is configured to store a program; and
the processor is configured to execute the program in the memory, so that the training device performs the method according to any one of claims 8 to 12.

**27.** A computer-readable storage medium, comprising a program, wherein when the program is run on a computer, the computer is enabled to perform the method according to any one of claims 1 to 12.

**28.** A computer program product comprising instructions, wherein when the computer program product runs on a computer, the computer is enabled to perform the method according to any one of claims 1 to 12.

**29.** A chip, wherein the chip comprises a processor and a data interface, and the processor reads, through the data interface, instructions stored in a memory, to perform the method according to any one of claims 1 to 12.

**Side A**

Air conduction speaker

Speech signal S

Air conduction microphone

Wireless network

~
TO
FIG. 1B

**FIG. 1A**

**Side B**

Air conduction speaker

Speech signal S

CONT.
FROM
FIG. 1A

Air conduction microphone

**FIG. 1B**

**Side A**

Air conduction speaker

Bone conduction microphone

China Mobile 4G          10:10

Email      Calendar     Camera    AppGallery

Telephone   Contacts    Messages    Gallery

Weather    Reading    Settings    Map

Browser    Player

Bone conduction
speech signal S2

Speech signal S1

Wireless network

TO
FIG. 2B

**FIG. 2A**

CONT. FROM FIG. 2A

FIG. 2B

**FIG. 3**

401

Separately collect, via a bone conduction microphone and an air conduction microphone, audio signals emitted from a sound source, to obtain n bone conduction speech signals and n air conduction speech signals, where n≥2

402

Obtain n first true transfer functions and n second true transfer functions respectively based on the n bone conduction speech signals and the n air conduction speech signals, where the first true transfer functions are in a one-to-one correspondence with the bone conduction speech signals, and the second true transfer functions are in a one-to-one correspondence with the air conduction speech signals

403

Use the n first true transfer functions as a training dataset of a neural network, and train the neural network by using a target loss function until a training termination condition is met, to obtain a trained neural network, where the target loss function is obtained based on the second true transfer function

**FIG. 4**

**FIG. 5**

Obtain a first bone conduction speech signal, and extract an excitation parameter from the first bone conduction speech signal — 601

Determine a first transfer function of the first bone conduction speech signal based on the first bone conduction speech signal — 602

Input the first transfer function into a trained neural network to obtain an output second transfer function, where the second transfer function is a predicted transfer function of an air conduction speech signal — 603

Obtain, based on the second transfer function and the excitation parameter, a first air conduction speech signal corresponding to the first bone conduction speech signal — 604

**FIG. 6**

Execution device 700

| Obtaining module 701 | First determining module 702 | Calculation module 703 | Second determining module 704 |

**FIG. 7**

Training device 800

| Collection module 801 | Calculation module 802 | Iteration module 803 |

**FIG. 8**

900

Training device

922 — Central processing unit

Power supply — 926

Wired or wireless network interface — 950

Operating system — 941

Data — 944

Application — 942

Storage medium — 930

Input/Output interface — 958

Memory — 932

**FIG. 9**

1000

## Execution device

Antenna

Antenna

| Receiver 1001 | Transmitter 1002 |
|---|---|

### Processor 1003

| Memory 1004 | Application processor 10031 | Communication processor 10032 |
|---|---|---|

**FIG. 10**

## INTERNATIONAL SEARCH REPORT

| International application No. |
|---|
| **PCT/CN2022/117989** |

**A. CLASSIFICATION OF SUBJECT MATTER**

G10L 21/0308(2013.01)i; G10L 21/0208(2013.01)i; H04R 3/00(2006.01)i

According to International Patent Classification (IPC) or to both national classification and IPC

**B. FIELDS SEARCHED**

Minimum documentation searched (classification system followed by classification symbols)

G10L; H04R

Documentation searched other than minimum documentation to the extent that such documents are included in the fields searched

Electronic data base consulted during the international search (name of data base and, where practicable, search terms used)

WPABSC; CNTXT; ENTXTC; VEN; IEEE: 神经网络, 深度学习, 对抗网络, 过程函数, 激活函数, 损失函数, 卷积, 语音, 骨传导, neural network, DNN, Generative Adversarial Network, GAN, transfor function, loss function, bone conduction

**C. DOCUMENTS CONSIDERED TO BE RELEVANT**

| Category* | Citation of document, with indication, where appropriate, of the relevant passages | Relevant to claim No. |
|---|---|---|
| X | CN 112017687 A (GOERTEK TECHNOLOGY CO., LTD.) 01 December 2020 (2020-12-01) description, paragraphs 5-106 | 8-12, 20-24, 26-29 |
| Y | CN 112017687 A (GOERTEK TECHNOLOGY CO., LTD.) 01 December 2020 (2020-12-01) description, paragraphs 5-106 | 1-7, 13-19, 25 |
| Y | CN 112599145 A (TIANJIN UNIVERSITY) 02 April 2021 (2021-04-02) description, paragraphs 4-67 | 1-7, 13-19, 25 |
| A | CN 112565977 A (ELEVOC TECHNOLOGY CO., LTD.) 26 March 2021 (2021-03-26) entire document | 1-29 |

☐ Further documents are listed in the continuation of Box C.    ☑ See patent family annex.

| | |
|---|---|
| * Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **01 December 2022** | **13 January 2023** |

| Name and mailing address of the ISA/CN | Authorized officer |
|---|---|
| **China National Intellectual Property Administration (ISA/CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/117989**

| Patent document cited in search report | | | Publication date (day/month/year) | Patent family member(s) | Publication date (day/month/year) |
|---|---|---|---|---|---|
| CN | 112017687 | A | 01 December 2020 | None | |
| CN | 112599145 | A | 02 April 2021 | None | |
| CN | 112565977 | A | 26 March 2021 | None | |

Form PCT/ISA/210 (patent family annex) (January 2015)